(19) Europäisches Patentamt
European Patent Office
Office européen des brevets

(11) Veröffentlichungsnummer: **0 237 910**
**B1**

(12) **EUROPÄISCHE PATENTSCHRIFT**

(45) Veröffentlichungstag der Patentschrift: **30.05.90**

(51) Int. Cl.[5]: **C09B 43/44**

(21) Anmeldenummer: **87103381.7**

(22) Anmeldetag: **10.03.87**

(54) **Verfahren zur Herstellung von Azofarbstoffen.**

(30) Priorität: **20.03.86 DE 3609342**

(43) Veröffentlichungstag der Anmeldung:
**23.09.87 Patentblatt 87/39**

(45) Bekanntmachung des Hinweises auf die Patenterteilung:
**30.05.90 Patentblatt 90/22**

(84) Benannte Vertragsstaaten:
**CH DE FR GB LI**

(56) Entgegenhaltungen:
**DE-A- 2 528 866**
**FR-A- 1 403 545**

(73) Patentinhaber: **BAYER AG,**
**D-5090 Leverkusen 1 Bayerwerk(DE)**

(72) Erfinder: **Leverenz, Klaus, Dr., Heymannstrasse 44,**
**D-5090 Leverkusen(DE)**

EP 0 237 910 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung ist ein Verfahren zur Herstellung von nichtionogenen Azofarbstoffen der Formel

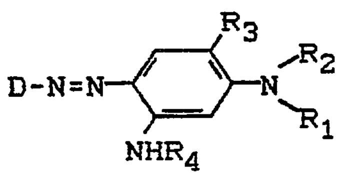

(I)

worin
D für den Rest einer Diazokomponente steht, die mindestens einen nichtionogenen elektronenziehenden Substituenten aufweist,
$R_1$ und $R_2$ unabhängig voneinander Wasserstoff oder einen gegebenenfalls substituierten Alkyl-oder Aralkylrest oder - gemeinsam - eine Alkylengruppe,
$R_3$ Wasserstoff, $OR_1$ oder $R_1$ und
$R_4$ Wasserstoff, einen Alkyl-, Aralkyl-, Aryl-, Hetaryl- oder Acylrest bedeuten.

Die Verbindungen der Formel I sind größtenteils bekannt und stellen wertvolle Dispersions-Farbstoffe dar.

Geeignete Diazokomponenten D sind sowohl aromatische als auch heteroaromatische Reste, insbesondere solche der Benzol-, Naphthalin-, Thiophen-, Thiazol-, Thiadiazol-, Benzthiazol-, Benzisothiazol- und Pyrazolreihe.

Geeignete elektronenziehende Substituenten sind $CF_3$, Alkylsulfonyl, Arylazo, Acyl, CN und vor allem $NO_2$.

Geeignete Acylreste sind Reste der Formeln $-COR_1$, $-COOR_1$, $-CONH_2$, $-CONHR_1$, $-CONR_1R_2$, $-COH$ und $-COR_3$, wobei $R_3$ Aryl oder Hetaryl bedeutet.

Geeignete Alkylreste $R_1$/$R_2$ sind z.B. solche mit 1-6 C-Atomen, die gegebenenfalls durch OH oder $C_1$-$C_4$-Alkoxy substituiert sind.

Geeignete Arylreste $R_1$-$R_3$, X u. a. sind Phenylreste, die durch $CF_3$, Halogen, $C_1$-$C_4$-Alkyl oder $C_1$-$C_4$-Alkoxy substituiert sein können.

Geeignete Aralkylreste sind Phenyl-$C_1$-$C_3$-alkylreste, die wie vorstehend im Phenylrest substituiert sein können.

Geeignete Alkylengruppen $R_1 + R_2$ sind $-(CH_2)_n-$ (n= 4-5).

Geeignete Halogenatome sind F und vor allem Br und Cl.

Man erhält die Verbindungen I üblicherweise dadurch, daß man Amine der Formel $D-NH_2$ diazotiert und auf Aniline der Formel

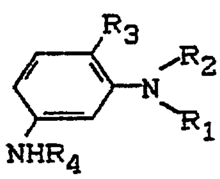

kuppelt.

Dieses Verfahren weist jedoch den Nachteil auf, daß die Kupplungskomponenten der angegebenen Formel oftmals relativ schwer zugänglich sind und/oder die Kupplung selbst nicht quantitativ verläuft, was niedrige Ausbeuten und ungenügende Reinheit der Verfahrensprodukte zur Folge hat.

Es wurde nun gefunden, daß man die Verbindungen der Formel I auf einfachere Weise und zum Teil in besserer Qualität und Ausbeute erhält, wenn man Azoverbindungen der Formel

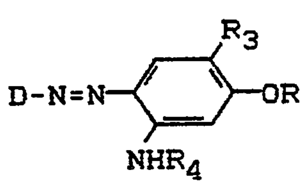

(II)

worin
D, $R_3$ und $R_4$ die obengenannte Bedeutung haben und R für $R_1$ steht, mit
Ammoniak oder Aminen der Formel

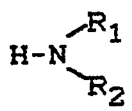

(III)

umsetzt.

Es muß als ausgesprochen überraschend angesehen werden, daß diese Umsetzung so glatt verläuft, da normalerweise derartige Austauschreaktionen nur dann zu zufriedenstellenden Ergebnissen führen, wenn der para-ständige Substituent-OR durch orthoständige Nitrogruppen (vgl. DE-A 2 528 866) oder eine quaternierte Diazokomponente D (vgl. DE-A 1 137 815 und 2 908 135) sehr stark aktiviert und nicht - wie im vorliegenden Falle -durch die Substituenten -$NHR_4$ und gegebenenfalls bei $R_3 \neq H$ ein- bis zweifach desaktiviert ist.

Auch war nicht von vornherein auszuschließen, daß bei der Aminolyse der OR-Gruppe eine Spaltung der Azobrücke stattfindet (vgl. Chem. Abstr. 82, 124 931s (1975) und 89, 129 453s (1982)).

Das erfindungsgemäße Verfahren kann in Wasser, organischen Lösungsmitteln oder in wäßrig-organischen Medien durchgeführt werden. Zweckmäßigerweise arbeitet man mit einem stöchiometrischen Überschuß der Amine III, die dann zugleich die Rolle des Lösungsmittels übernehmen. Die Aminolyse erfolgt im allgemeinen bei 50 - 150°C, vorzugsweise 80 - 120°C, also unter relativ milden Bedingungen.

Der Reaktionsablauf und das Reaktionsende können leicht dünnschichtchromatographisch kontrolliert bzw. bestimmt werden.

Bevorzugt einzusetzende Azoverbindungen II sind:

1) Verbindungen der Formel

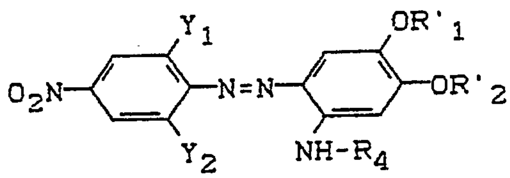

(IV)

worin
$R_4$ Wasserstoff, einen Alkyl-, Aralkyl-, Aryl-, Hetaryl- oder Acylrest,
$R'_1$ $C_1$–$C_4$-Alkyl,
$R'_2$ $C_1$–$C_4$-Alkyl,
$Y_1$ F, Cl, Br, J, CN, $NO_2$ oder $OR'_1$ und
$Y_2$ $Y_1$ oder $CF_3$, $SO_2R'_1$, $CO_2R_1$ oder $COR'_1$ bedeuten

2) sowie solche der Formel

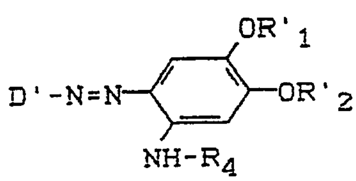

(V)

worin
D' den Rest einer heterocyclischen Diazokomponente der oben angegebenen Art bedeutet, insbesondere solche der Formeln

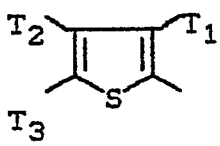, 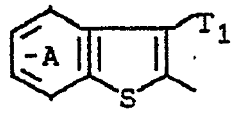, 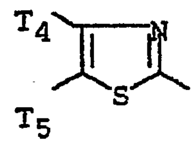,

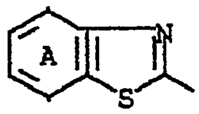, 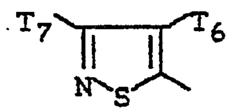, 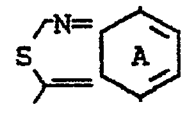

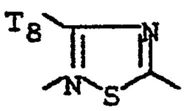, 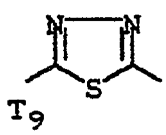, 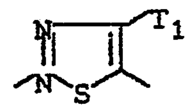

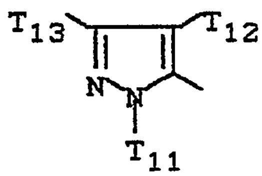, 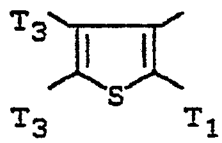,

worin
$T_1$ = $NO_2$, CN oder $COOR_1$
$T_2$ = H oder $CH_3$
$T_3$ = $NO_2$, CN, $COOR_1$, $COR_1$, $COR_3$, $SO_2R_1$, $SO_2R_3$ oder Phenylazo
$T_2 + T_3$ = $-CH_2CH_2CH_2CH_2-$ oder $-CH_2CH_2CH_2-$
$T_4$ = H, $CH_3$ oder Phenyl
$T_5$ = $NO_2$, $COOR_1$, CN oder Phenylazo
$T_6$ = Br, $NO_2$ oder CN
$T_7$ = H, $R_1$, $R_3$ oder $SO_2R_1/R_3$
$T_8$ = Cl, Br, CN, Phenyl oder $SR_1$
$T_9$ = Cl, Br, $CF_3$, $SO_2R_1/R_3$ oder $SR_1$
$T_{10}$ = $R_1$, $R_3$, Cl, Br oder $COOR_1$
$T_{11}$ = H oder $R_1$
$T_{12}$ = $NO_2$, CN, Cl, Br, $COOR_1$
$T_{13}$ = H, CN oder $R_1$
wobei $R_1/R_3/R_4$ die obengenannte Bedeutung haben und die mit A gekennzeichneten Ringe sowie der Phenylazorest durch $R_1$, Cl, Br, $NO_2$, CN, $COOR_1$, SCN oder $SO_2R_1$ substituiert sein können.

Die Verbindungen der Formeln II, IV bzw. V sind nur im Einzelfall bekannt (vgl. DE-PS 643 058 und 744 215 sowie US 2 870 137), jedoch durchweg nach an sich bekannten Methoden leicht zugänglich.

Ganz besonders bevorzugt sind Verbindungen der genannten Formeln aus der Benzisothiazol-Reihe.

Als Verbindungen der Formel III seien beispielsweise genannt:
Methylamin, Ethylamin, Chlorethylamin, Hydroxyethylamin, Butylamin, Hexylamin, Isopropylamin, 3-Methyl-butanamin, Allylamin, Stearylamin, Diethylamin, Dipropylamin, Dibutylamin, 2-Ethyl-hexylamin, Ditridecylamin, N-Ethylisoprylamin, N-Methylisobutylamin, N-Methylstearylamin, 2-Ethoxyethylamin, Diallylamin, Di-2-methoxyethylamin, 3-Ethylaminopropionitril, N-Ethyl-butylamin, 3-Methoxypropylamin, 3-Ethoxy-propylamin, 3-Butoxypropylamin, 3-(2-Ethoxyhexoxy)propylamin, Diethanolamin, Isopropanolamin, Diisopropanolamin, 2-(2-Amino-ethoxy)ethanol, 2-Propylaminoethanol, 2-Butylaminoethanol, Cyclopropanamin, Cyclohexamin, N-Ethyl-cyclohexanamin, Benzylamin, 2-Phenylethylamin, 2-Methoxyphenylethylamin, 4-Methoxyphenylethylamin, 3,4-Dimethoxyphenylethylamin, 4-Hydroxyphenylethylamin, 2-Diethylaminoethylamin, 3-Dimethylaminopropylamin, N-Methyl-1,3-propandiamin, Diethylentriamin, Anilin, 4-Methoxyanilin, 3-Chloranilin, 4-Dimethylamino-anilin, 3,4-Dimethoxyanilin, p-Toluidin, 3-Aminoacetanilid, 1-Aminonaphthalin, Pyrrolidin, Piperidin, Piperazin, N-(2-Hydroxyethyl)piperazin, N-(2-Aminoethyl)piperazin, 4-Methylpiperidin, Morpholin, 2-Aminomethyl-furan, Hexamethylenimin, Imidazol, 3-Butylamino-propionsäure-butylester, 2-Butylamino-ethanphosphorsäure-dimethylester, 3-Butylaminopropionitril, 2-Methylaminoethansulfonsäure, 3-Aminopropionsäure, 3-Amino-tetramethylensulfon.

Als Lösungsmittel für die Aminolyse kommen in Betracht: Wasser, im Überschuß eingesetzte Amine sowie Alkohole wie Methanol, Ethanol, Propanol, Isopropanol, n-bzw. iso-Butanol, Glykol, Glykolether

wie 2-Methoxy-ethanol, 2-Ethoxyethanol, 2-Isopropoxy-ethanol, 2-Butoxyethanol, Diethylenglykol, Diethylenglykol-dimethylether, Diethylenglykol-diethylether, Propylenglykol-monoethylether, Dioxan, Estern wie Methylglykolacetat und Propylenglykolmonomethyletheracetat, Amiden wie Formamid, Dimethylformamid, Dimethylacetamid, N-Methyl-pyrrolidon, Tetramethylhanstoff, Nitrilen wie Acetonitril, 2-Hydroxy-propionitril, 2-Methoxy-propionitril, Sulfonen wie Dimethylsulfon, Tetramethylensulfon, Dimethylsulfoxid, (het)aromatischen Verbindungen wie Toluol, Xylol, Chlorbenzol, Dichlorbenzol, Nitrobenzol, Pyridin, Picolin oder Chinolin.

Die Lösungsmittel können auch in Mischung untereinander eingesetzt werden.

In den nachfolgenden Beispielen bedeuten "Teile" Gewichtsteile.

Farbstoffe der Formel

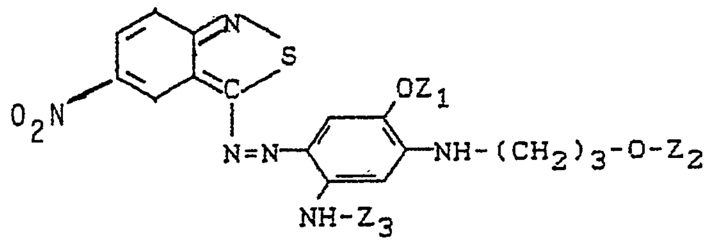

(IV)

worin

$Z_1 = C_1–C_4$-Alkyl,
$Z_2 = C_1–C_4$-Alkyl,

$Z_3$ = H, $Z_4$, 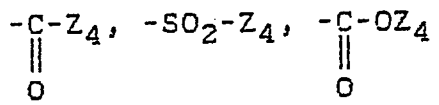 und

$Z_4 = C_1–C_4$-Alkyl

sind neu und deshalb ebenfalls Gegenstand der Erfindung.

Sie färben Polyesterfasern in blaugrün bis grünen Tönen mit guter Lichtechtheit.

Besonders bevorzugt sind solche der Formel (VI), worin

$Z_1 = C_1–C_2$-Alkyl,
$Z_2 = CH_3$, $C_2H_5$ oder n-$C_4H_9$ und
$Z_3 = COCH_3$,

sowie Mischungen dieser Farbstoffe, die sich hinsichtlich der Definition von $Z_2$ unterscheiden.

Beispiel 1

5,5 Teile des Farbstoffs der Formel

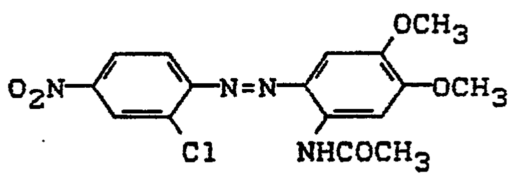

(hergestellt nach DRP 744 215) werden in einer Mischung aus 50 Teilen Dimethylformamid und 10 Teilen Pyridin mit 5 Teilen 2-Methoxyethylamin 75 Minuten auf 100°C erhitzt. Nach dem Abkühlen auf 80°C werden 50 Teile Methanol zugefügt und der entstandene Farbstoff der Formel

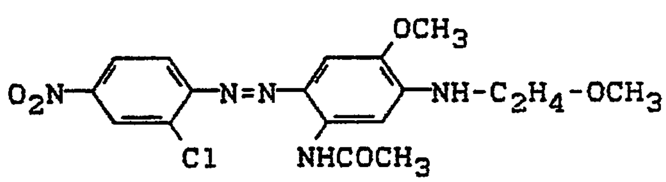

nach Erkalten abfiltriert; Ausbeute 5 Teile. Er färbt Polyethylenterephthalat-Fasern in rotvioletten Tönen und ist gekennzeichnet durch einen $\lambda_{max}$-Wert von 560 nm bei einer molaren Extinktion $\varepsilon\lambda max$ von 40800 [l/mol·cm] gemessen in Dimethylformamid.

Beispiel 2

5,5 Teile des Farbstoffs der Formel

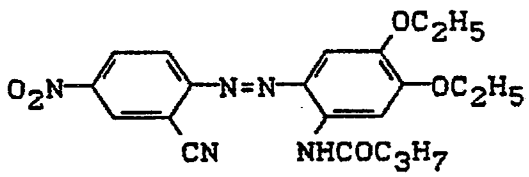

(hergestellt durch Kupplung von diazotiertem 2-Amino-5-nitro-benzonitril auf 3,4-Dimethoxy-buttersäureanilid) werden in 50 Teilen N-Methylpyrrolidon unter Zusatz von 3 Teilen p-Anisidin 20 Stunden unter Rühren auf 100°C erhitzt. Nach Zusatz von 50 Teilen Methanol isoliert man nach Erkalten 6 Teile des Farbstoffs der Formel

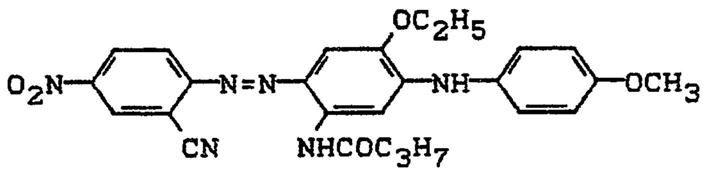

Er färbt Polyesterfasern in licht- und sublimierechten rotstichig blauen Tönen. $\lambda_{max}$: 600 nm; $\varepsilon\lambda max$ 45415 (DMF).

Beispiel 3

6,8 Teile des Farbstoffs der Formel

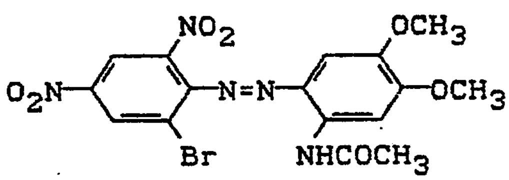

(hergestellt aus diazotiertem 2-Brom-4,6-dinitro-anilin und 3,4-Dimethoxy-acetanilid) werden in 50 Teilen Dimethylacetamid mit 5 Teilen Ethyl-3,6,9-trioxadecylamin 3 Stunden auf 100°C erhitzt. Nach Erkalten wird der entstandene Farbstoff mit 100 Teilen Wasser ausgefällt. Er besitzt wahrscheinlich nachstehende Konstitution

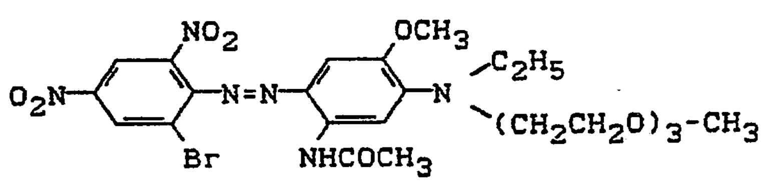

und färbt Polyester in marineblauen Tönen; $\lambda_{max}$: 608 nm, $\varepsilon\lambda max$: 34420 (DMF).

Beispiel 4

67 Teile des Farbstoffs der Formel

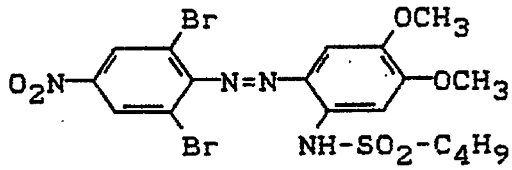

(hergestellt aus diazotiertem 2,6-Brom-4-dinitro-anilin und N-[3,4-Dimethoxyphenyl]-butansulfonsäureamid) werden in 80 Teilen Dimethylformamid mit 14 Teilen Zinkcyanid, 2 Teilen Kupfer(I)-cyanid und 30 Teilen 4-Ethoxy-anilin auf 100°C erwärmt. Nach Abkühlen und Zusatz von 200 Teilen Methanol isoliert man 52 Teile des Umsetzungsproduktes der Formel

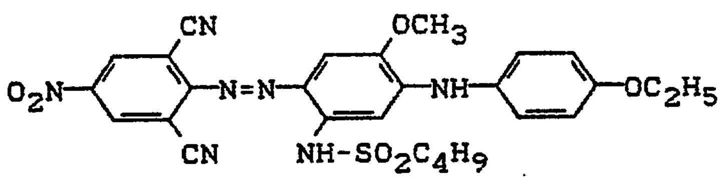

Der Farbstoff färbt Polyesterfasern in grünstichig blauen Tönen mit guter Licht- und Sublimierechtheit. $\lambda_{max}$ 592 nm; $\varepsilon\lambda max$: 6690 (DMF).

In analoger Weise erhält man, ausgehend von den entsprechenden Azoverbindungen der Formel II (worin R = $CH_3$ oder $CH(CH_3)_2$), die Farbstoffe der Formel

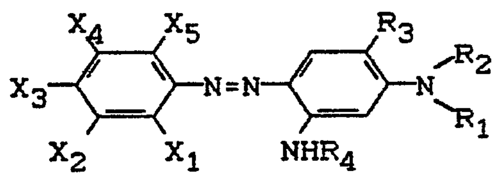

gemäß folgender Tabelle 1:

Tabelle 1

| Bsp. Nr. | $X_1$ | $X_2$ | $X_3$ | $X_4$ | $X_5$ | $R_3$ | $R_1$ | $R_2$ | $R_4$ | Lösungsmittel | Temp. (°C) | λmax (nm) in DMF |
|---|---|---|---|---|---|---|---|---|---|---|---|---|
| 5 | Cl | H | $NO_2$ | H | H | $-CH(CH_3)_2$ | $-CH_2-CH_2CH_2CH_2-$ | | $-COCH_3$ | DMF/Pyridin | 25 | 588 |
| 6 | " | " | " | " | " | " | H | $-(CH_2)_3-OCH_3$ | " | " | 80 | 564 |
| 7 | " | " | " | " | " | " | H | $-C_4H_9$ | " | " | 100 | 568 |
| 8 | Br | " | " | " | " | $OCH_3$ | H | $-C_6H_{11}$ | " | " | " | 565 |
| 9 | $NO_2$ | " | " | " | " | " | $-CH_2-CH_2-CH_2-CH_2-$ | | $-COC_2H_5$ | DMF | 80 | 607 |
| 10 | " | " | " | " | " | " | $-CH_3$ | $-CH_2-C_6H_5$ | $-COC_2H_4-OCH_3$ | " | " | 574 |
| 11 | " | " | " | " | Br | " | $-C_2H_5$ | $-C_3H_7$ | $-SO_2-CH_3$ | N-Methylpyrrolidin | 25 | 598 |
| 12 | " | " | " | " | " | " | " | $-C_4H_9$ | $-SO_2-C_4H_9$ | " | " | 600 |
| 13 | " | " | " | " | " | " | " | $-C_3H_7$ | $-SO_2C_6H_5$ | " | " | 582 |
| 14 | " | " | " | " | " | " | $-(CH_2)_6-$ | | $-COC_3H_7$ | " | " | 618 |
| 15 | " | " | " | " | " | " | $CH_3$ | $-C_{18}H_{37}$ | $-COCH_3$ | Dimethylacetamid | 80 | 610 |
| 16 | " | " | " | " | " | " | $-C_4H_9$ | $-C_2H_4P(OCH_3)_2$ | " | DMF/Pyridin | 100 | |
| 17 | " | " | " | " | " | " | " | $-C_2H_4COOC(CH_3)_3$ | " | " | " | |
| 18 | " | " | " | " | " | " | $-C_8H_{17}$ | $-C_8H_{17}$ | $-COC_3H_7$ | " | 80 | 618 |
| 19 | CN | " | " | " | H | " | H | $-(CH_2)_3OC_3H_7$ | $-COC_2H_4OC_2H_5$ | DMF | " | 590 |
| 20 | " | " | " | " | " | " | $-(CH_2)_6-$ | | " | " | " | 602 |

Tabelle 1 (Fortsetzung)

| Bsp. Nr. | $X_1$ | $X_2$ | $X_3$ | $X_4$ | $X_5$ | $R_3$ | $R_1$ | $R_2$ | $R_4$ | Lösungsmittel | Temp. (°C) | λmax (nm) in DMF |
|---|---|---|---|---|---|---|---|---|---|---|---|---|
| 21 | CN | H | $NO_2$ | H | Br | $OCH_3$ | H | $-C_4H_9$ | $COC_2H_4OCH_3$ | DMF | 25 | 628 |
| 22 | " | " | " | " | " | " | $CH_3$ | $-CH_2C_6H_5$ | " | " | 60 | " |
| 23 | " | " | " | " | " | " | H | 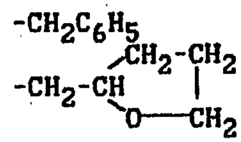 | " | " | 25 | 610 |
| 24 | " | " | " | " | " | " | H | $-C_2H_4OCH_3$ | " | " | 60 | 618 |
| 25 | " | " | " | " | " | " | H | 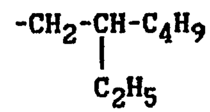 | $COCH_3$ | DMF/Pyridin | 140 | 629 |
| 26 | " | " | " | " | " | " | | $-(CH_2)_6-$ | " | " | 25 | 643 |
| 27 | Br | " | " | " | $NO_2$ | H | $CH_3$ | $C_2H_5$ | " | " | " | 563 |
| 28 | CN | " | " | " | " | " | $C_2H_5$ | $C_3H_7$ | $COC_3H_7$ | " | " | 604 |
| 29 | " | " | " | " | " | $OCH_3$ | $C_4H_9$ | $C_4H_9$ | $COCH_3$ | " | " | 642 |
| 30 | " | " | " | " | CN | " | H | $-C_6H_4-N(CH_3)_2(p)$ | $-SO_2-C_4H_9$ | DMF | 40 | 616 |
| 31 | " | " | " | " | " | " | " | $-C_6H_4-NHCOCH_3(m)$ | " | " | 60 | 584 |
| 32 | " | " | " | " | " | " | " | $-C_6H_4-Cl(p)$ | " | " | 85 | 586 |
| 33 | " | " | " | " | " | " | " | $-C_6H_4-CH_3(o)$ | " | " | " | 576 |
| 34 | " | " | " | " | " | " | " | $-C_{10}H_7(\alpha)$ | " | " | 80 | 584 |
| 35 | " | " | " | " | " | " | " | $-C_6H_5$ | " | " | 60 | " |
| 36 | " | " | " | " | " | " | $-C_2H_4OCH_3$ | $-C_2H_4OCH_3$ | $-SO_2CH_3$ | " | 45 | 636 |

Tabelle 1 (Fortsetzung)

| Bsp. Nr. | $X_1$ | $X_2$ | $X_3$ | $X_4$ | $X_5$ | $R_3$ | $R_1$ | $R_2$ | $R_4$ | Lösungsmittel | Temp. (°C) | λmax (nm) in DMF |
|---|---|---|---|---|---|---|---|---|---|---|---|---|
| 37 | CN | H | $NO_2$ | H | CN | $OCH_3$ | $-C_2H_5$ | $-C_3H_7$ | $-SO_2C_6H_5$ | DMF | 25 | 640 |
| 38 | " | " | " | " | " | " | " | $-C_4H_9$ | $-COC_6H_4-CH_{3(m)}$ | " | 50 | 646 |
| 39 | " | " | " | " | " | " | $-C_4H_9$ | " | $-COOC_2H_5$ | N-Methylpyrrolidon | 25 | 640 |
| 40 | " | " | " | " | " | " | $-C_2H_5$ | $-C_3H_7$ | $-COC_3H_7$ | " | 80 | " |

Beispiel 41

12 Teile des Farbstoffs der Formel

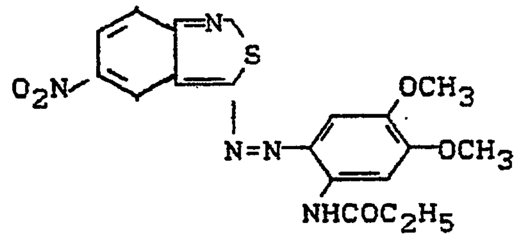

(hergestellt aus diazotiertem 3-Amino-5-nitro-benzisothiazol(2.1) N-(3,4-Dimethoxyphenyl)-propionsäureamid) werden in 100 ml DMF mit 10 Teilen N-Ethyl-propylamin 2 Stunden unter Rühren auf 80°C erhitzt. Nach Zugabe von 200 ml Methanol und Abkühlen isoliert man 10 Teile des Farbstoffs der Formel

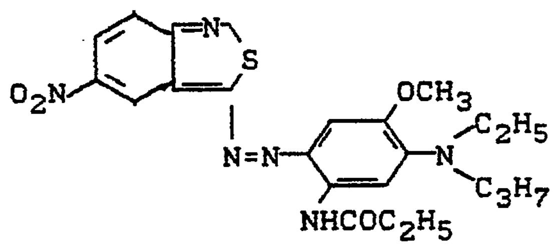

Er färbt Polyestermaterialien in blaustichig grünen Tönen mit guter Lichtechtheit; $\lambda_{max}$: 665 nm (DMF). Aus den Farbstoffen

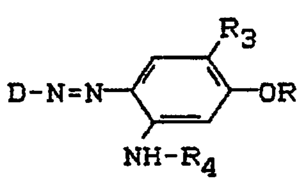 (R=$CH_3$, $C_2H_5$ oder $CH(CH_3)_2$)

wurden die in Tabelle 2 aufgeführten Farbstoffe der Formel

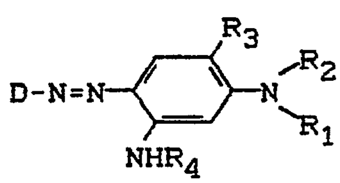

erhalten.

Tabelle 2

| Bsp. Nr. | D | $R_3$ | $R_1$ | $R_2$ | $R_4$ | Lösungsmittel | Temp. in (°C) | $\lambda_{max}$ (DMF) in nm |
|---|---|---|---|---|---|---|---|---|
| 42 | 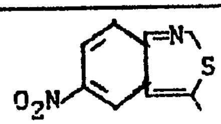 | $OCH_3$ | $-C_2H_5$ | $-C_2H_5$ | $-COCH_3$ | N-Methylpyrrolidon | 50 | 668 |
| 43 | " | " | $CH_3$ | $-C_2H_4OH$ | " | " | 80 | 662 |
| 44 | " | " | $-C_2H_5$ | $-C_3H_7$ | $-COC_3H_7$ | " | " | 669 |
| 45 | " | " | $-C_4H_9$ | $-C_4H_9$ | " | " | " | 672 |
| 46 | " | " | $-CH_3$ | $-C_{18}H_{37}$ | $-COCH_3$ | Dimethylformamid | " | 666 |
| 47 | " | " | $-C_2H_4OH$ | $-C_2H_4OH$ | " | " | 100 | 668 |
| 48 | " | " | $-C_2H_4-$ | $O-C_2H_4-$ | " | " | 90 | 628 |
| 49 | " | " | $-(CH_2)_4-$ | - | " | " | 25 | 680 |
| 50 | " | " | H | $-(CH_2)_3-N(CH_3)_2$ | " | " | 80 | 656 |
| 51 | " | " | " | $-C_2H_4OCH_3$ | $COC_2H_5$ | " | 70 | 649 |
| 52 | " | " | " | $-C_4H_9$ | " | Dimethylsulfoxid | 80 | 654 |
| 53 | " | " | " | $-(C_2H_4O)_4CH_3$ | $-COCH_3$ | Dimethylformamid | " | 652 |
| 54 | " | " | " | $-C(CH_3)_3$ | " | " | 90 | 646 |

**<u>Tabelle 2</u> (Fortsetzung)**

| Bsp. Nr. | D | $R_3$ | $R_1$ | $R_2$ | $R_4$ | Lösungsmittel | Temp. in (°C) | $\lambda_{max}$ (DMF) in nm |
|---|---|---|---|---|---|---|---|---|
| 55 | 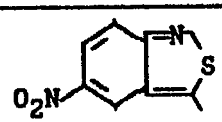 | $OCH_3$ | H | 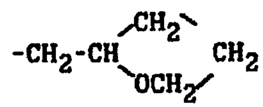 | $-COCH_3$ | Dimethylformamid | 80 | 646 |
| 56 | " | " | " | $-(CH_2)_3-OC_4H_9$ | " | Wasser | 80 | 654 |
| 57 | " | " | H | $-(CH_2)_3-OCH_3$ | $-COCH_3$ | Dimethylformamid | 60 | 652 |
| 58 | " | " | " | $-(CH_2)_3-OC_2H_5$ | " | " | " | 657 |
| 59 | " | " | " | $-(CH_2)_3-OCH(CH_3)_2$ | " | Wasser | 80 | 654 |
| 60 | " | $OCH(CH_3)_2$ | " | $-(CH_2)_3COOH$ | $-COC_2H_5$ | DMF | " | 650 (i) |
| 61 | " | " | " | $-C_2H_4-SO_3H$ | " | N-Methylpyrrolidon | " | 668 |
| 62 | " | $-OCH_3$ | $CH_3$ | " | $-CONH_2$ | DMF | " | |
| 63 | " | $-OC_2H_5$ | $-C_2H_5$ | $-C_3H_7$ | $-SO_2C_4H_9$ | Tetramethylensulfon | " | 764 (i) |
| 64 | " | $-OCH_3$ | $-CH_2-CH_2$ | $-CH_2-CH_2-$ | $-SO_2C_6H_5$ | " | 60 | 758 |
| 65 | " | " | $-C_2H_5$ | $-C_2H_5$ | $-SO_2C_4H_9$ | DMF | 80 | 764 |
| 66 | " | $OCH(CH_3)_2$ | $-(CH_2)_4-$ | | $-COCH_3$ | " | 25 | 688 |

**Tabelle 2** (Fortsetzung)

| Bsp. Nr. | D | $R_3$ | $R_1$ | $R_2$ | $R_4$ | Lösungsmittel | Temp. in (°C) | $\lambda_{max}$ (DMF) in nm |
|---|---|---|---|---|---|---|---|---|
| 67 | 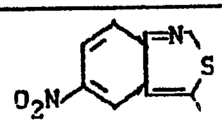 | $OCH(CH_3)_2$ | $-CH_3$ | $C_18H_{37}$ | $-COCH_3$ | Dimethylformamid | 90 | 668 |
| 68 | " | " | H | $-C_{16}H_{33}$ | $-COC_3H_7$ | " | 80 | 661 |
| 69 | " | " | " | $-CH_2-CH-C_4H_9$<br>$C_2H_5$ | " | " | " | 660 |
| 70 | " | $OCH_3$ | " | $-C_6H_5$ | $-COCH_3$ | " | 100 | 662 |
| 71 | " | " | " | $-C_6H_4-OCH_3$(p) | " | " | 110 | 674 |
| 72 | " | " | " | $-C_6H_3(OCH_3)_2$(3,4) | " | " | " | 680 |

**Tabelle 2** (Fortsetzung)

| Bsp. Nr. | D | $R_3$ | $R_1$ | $R_2$ | $R_4$ | Lösungsmittel | Temp. in (°C) | $\lambda_{max}$ (DMF) in nm |
|---|---|---|---|---|---|---|---|---|
| 73 | 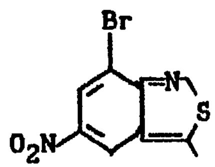 | " | -C2$H_5$ | $-C_3H_7$ | $-COC_2H_5$ | Dimethylformamid | 50 | |
| 74 | " | " | " | $-C_2H_5$ | $-SO_2C_4H_9$ | " | 80 | |
| 75 | " | | | " | $-CONH_2$ | " | " | 671 |
| 76 | 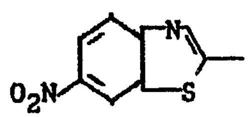 | " | " | $-C_3H_7$ | $-COC_4H_9$ | N-Methylpyrrolidon | " | 625 (i) |
| 77 | 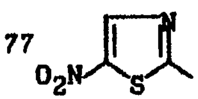 | " | " | " | $-COCH_3$ | " | 30 | |

<u>Tabelle 2</u> (Fortsetzung)

| Bsp. Nr. | D | $R_3$ | $R_1$ | $R_2$ | $R_4$ | Lösungsmittel | Temp. in (°C) | $\lambda_{max}$ (DMF) in nm |
|---|---|---|---|---|---|---|---|---|
| 78 | 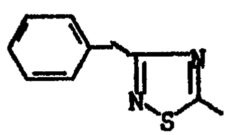 | $OCH_3$ | -C2H5 | $-C_3H_7$ | $-COCH_3$ | Dimethylformamid | 80 | 608 nm (i) |

Beispiel 79

258,9 Teile ddes Farbstoffs der Formel

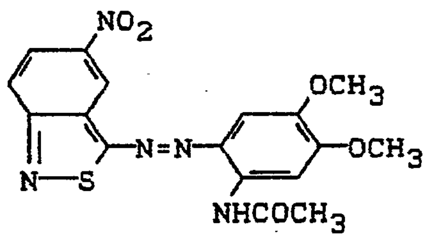

(hergestellt nach DRP 744 215) werden in einer Lösung von 22,9 Teilen 3-Methoxypropylamin, 26,5 Teilen 3-Ethoxypropylamin und 33,7 Teilen n-Butoxypropylamin in 600 Teilen Dimethylformamid 75 Minuten auf 100°C erhitzt. Nach dem Abkühlen auf 80°C werden 50 Teile Methanol zugefügt und der entstandene Farbstoff der Formel

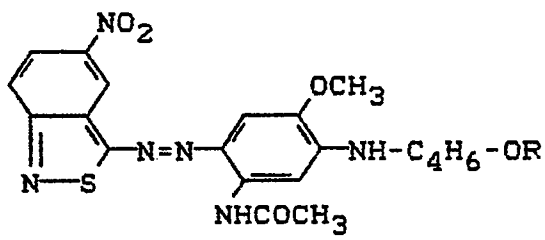

[R = 1/3 $CH_3$
1/3 $C_2H_5$
1/3 $C_4H_9$

nach Erkalten abfiltriert. Ausbeute: 215,3 Teile.

Der Farbstoff zeichnet sich durch ein gutes Ziehvermögen auf Polyethylenterephthalat-Fasern, die in einem grünen Farbton gefärbt werden, aus.

**Patentansprüche**

1. Verfahren zur Herstellung von nichtionogenen Azofarbstoffen der Formel

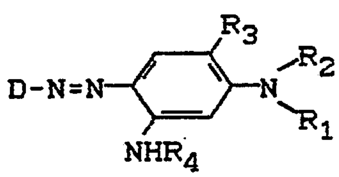

(I)

worin
D für den Rest einer Diazokomponente steht, die mindestens einen nichtionogenen elektronenziehenden Substituenten aufweist,
$R_1$ und $R_2$ unabhängig voneinander Wasserstoff oder einen gegebenenfalls substituierten Alkyl- oder Aralkylrest oder - gemeinsam - eine Alkylengruppe,
$R_3$ Wasserstoff, $OR_1$ oder $R_1$ und
$R_4$ Wasserstoff, einen Alkyl-, Aralkyl-, Aryl-, Hetaryl-oder Acylrest bedeuten,
dadurch gekennzeichnet, daß man Azoverbindungen der Formel

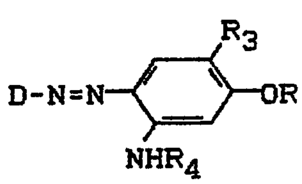

(II)

worin
D, $R_3$ und $R_4$ die obengenannte Bedeutung haben und R für $R_1$ steht, mit

Ammoniak oder Aminen der Formel

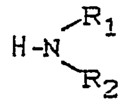 (III)

unsetzt.

2. Verfahren nach Anspruch 1, dadurch gekennzeichnet, daß man Verbindungen der Formel

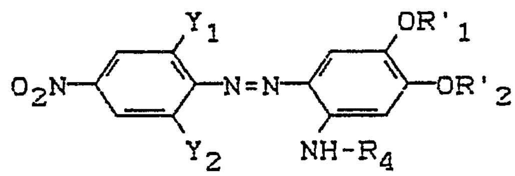 (IV)

worin

$R_4$ Wasserstoff, einen Alkyl-, Aralkyl-, Aryl-, Hetaryl- oder Acylrest,
$R'_1$ $C_1$–$C_4$-Alkyl,
$R'_2$ $C_1$–$C_4$-Alkyl,
$Y_1$ F, Cl, Br, J, CN, $NO_2$ oder $OR'_1$ und
$Y_2$ $Y_1$ oder $CF_3$, $SO_2R'_1$, $CO_2R_1$ oder $COR'_1$ bedeuten, umsetzt.

3. Verfahren nach Anspruch 1, dadurch gekennzeichnet, daß man Verbindungen der Formel

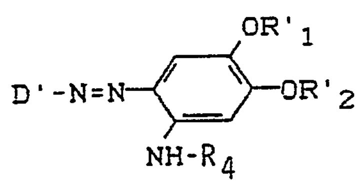 (V)

worin

D' den Rest einer heterocyclischen Diazokomponente der oben angegebenen Art bedeutet, insbesondere solche der Formeln

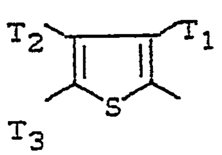 , 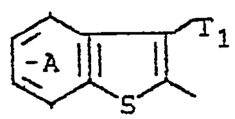 , 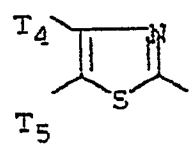 ,

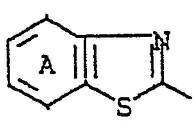 , 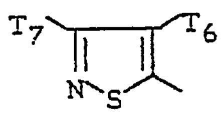 , 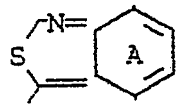

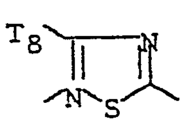 , 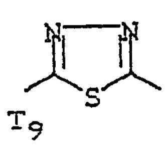 , 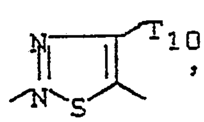 ,

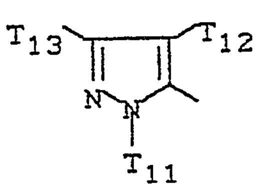 , 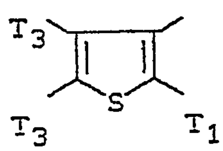 ,

worin

$T_1 = NO_2$, CN oder $COOR_1$
$T_2$ = H oder $CH_3$
$T_3 = NO_2$, CN, $COOR_1$, $COR_1$, $COR_3$, $SO_2R_1$, $SO_2R_3$ oder Phenylazo
$T_2 + T_3 = -CH_2CH_2CH_2CH_2-$ oder $-CH_2CH_2CH_2-$
$T_4$ = H, $CH_3$ oder Phenyl
$T_5 = NO_2$, $COOR_1$, CN oder Phenylazo
$T_6$ = Br, $NO_2$ oder CN
$T_7$ = H, $R_1$, $R_3$ oder $SO_2R_1/R_3$
$T_8$ = Cl, Br, CN, Phenyl oder $SR_1$
$T_9$ = Cl, Br, $CF_3$, $SO_2R_1/R_3$ oder $SR_1$
$T_{10} = R_1$, $R_3$, Cl, Br oder $COOR_1$
$T_{11}$ = H oder $R_1$
$T_{12} = NO_2$, CN, Cl, Br, $COOR_1$
$T_{13}$ = H, CN oder $R_1$
wobei $R_1/R_3/R_4$ die obengenannte Bedeutung haben und die mit A gekennzeichneten Ringe sowie der Phenylazorest durch $R_1$, Cl, Br, $NO_2$, CN, $COOR_1$, SCN oder $SO_2R_1$ substituiert sein können, umsetzt.

4. Verfahren nach Anspruch 1, dadurch gekennzeichnet, daß man die Umsetzung bei 50–150°C durchführt.

5. Farbstoffe der Formel

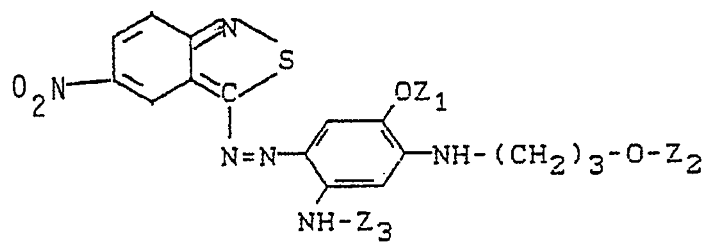

(IV)

worin
$Z_1 = C_1–C_4$-Alkyl,
$Z_2 = C_1–C_4$-Alkyl,

$Z_3$ = H, $Z_4$, $-\underset{\underset{O}{\|}}{C}-Z_4$, $-SO_2-Z_4$, $-\underset{\underset{O}{\|}}{C}-OZ_4$ und

$Z_4 = C_1–C_4$-Alkyl.

6. Farbstoff gemäß Anspruch 5, dadurch gekennzeichnet, daß
$Z_1 = C_1–C_2$-Alkyl,
$Z_2 = CH_3$, $C_2H_5$ oder n-$C_4H_9$ und
Z = $COCH_3$ bedeuten.

## Claims

1. Process for the preparation of non-ionic azo dyestuffs of the formula

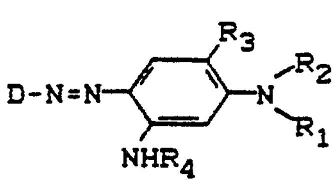

(I)

wherein
D represents the radical of a diazo component which contains at least one non-ionic electronwithdrawing substituent,
$R_1$ and $R_2$ independently of one another denote hydrogen or an optionally substituted alkyl or aralkyl radical, or – together – denote an alkylene group,
$R_3$ denotes hydrogen, $OR_1$ or $R_1$ and
$R_4$ denotes hydrogen or an alkyl, aralkyl, aryl, hetaryl or acyl radical,
characterized in that azo compounds of the formula

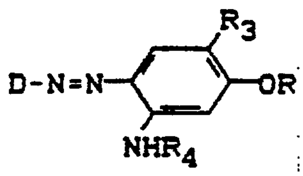

(II)

wherein
D, $R_3$ and $R_4$ have the abovementioned meaning and R represents $R_1$, are reacted with ammonia or amines of the formula

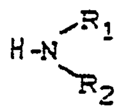

(III)

2. Process according to claim 1, characterized in that compounds of the formula

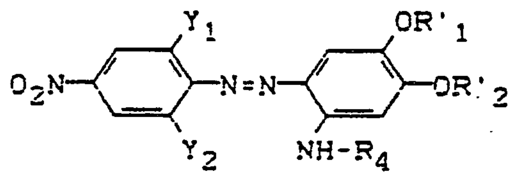

(IV)

wherein
$R_4$ denotes hydrogen or an alkyl, aralkyl, aryl, hetaryl or acyl radical,
$R'_1$ denotes $C_1$–$C_4$-alkyl,
$R'_2$ denotes $C_1$–$C_4$-alkyl,
$Y_1$ denotes F, Cl, Br, I, CN, $NO_2$ or $OR'_1$ and
$Y_2$ denotes $Y_1$ or $CF_3$, $SO_2R'_1$, $CO_2R_1$ or
$COR'_1$,
are reacted.

3. Process according to claim 1, characterized in that componds of the formula

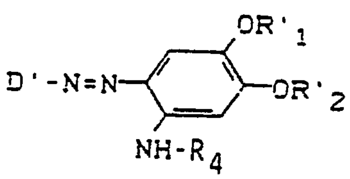

(V)

wherein D′ denotes the radical of a heterocyclic diazo component of the type mentioned above, in particular those of the formulae

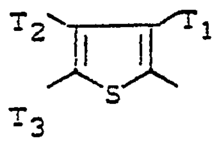 , 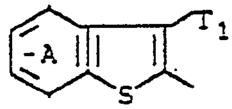 , 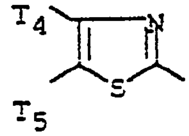 ,

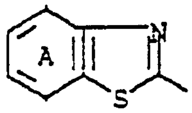 , 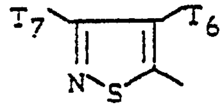 , 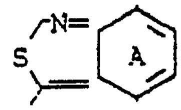

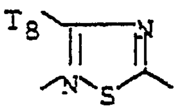 , 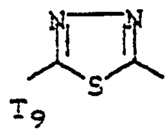 , 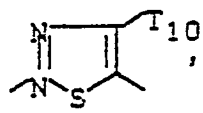 ,

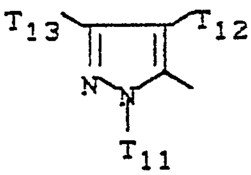 , 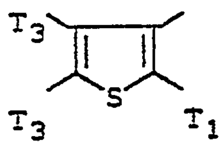 ,

wherein
$T_1 = NO_2$, CN or $COOR_1$,
$T_2 = H$ or $CH_3$,
$T_3 = NO_2$, CN, $COOR_1$, $COR_1$, $COR_3$, $SO_2R_1$, $SO_2R_3$ or phenylazo,
$T_2 + T_3 = -CH_2CH_2CH_2CH_2-$ or $-CH_2CH_2CH_2-$,
$T_4 = H$, $CH_3$ or phenyl,
$T_5 = NO_2$, $COOR_1$, CN or phenylazo,
$T_6 = Br$, $NO_2$ or CN,
$T_7 = H$, $R_1$, $R_3$ or $SO_2R_1/R_3$,
$T_8 = Cl$, Br, CN, phenyl or $SR_1$,
$T_9 = Cl$, Br, $CF_3$, $SO_2R_1/R_3$ or $SR_1$,
$T_{10} = R_1$, $R_3$, Cl, Br or $COOR_1$,
$T_{11} = H$ or $R_1$,
$T_{12} = NO_2$, CN, Cl, Br, $COOR_1$, and
$T_{13} = H$, CN or $R_1$,
and wherein
$R_1/R_3/R_4$ have the abovementioned meaning, it being possible for the rings labelled A and the phenylazo radical to be substituted by $R_1$, Cl, Br, $NO_2$, CN, $COOR_1$, SCN or $SO_2R_1$, are reacted.

4. Process according to claim 1, characterized in that the reaction is carried out at 50 – 150°C.

5. Dyestuffs of the formula

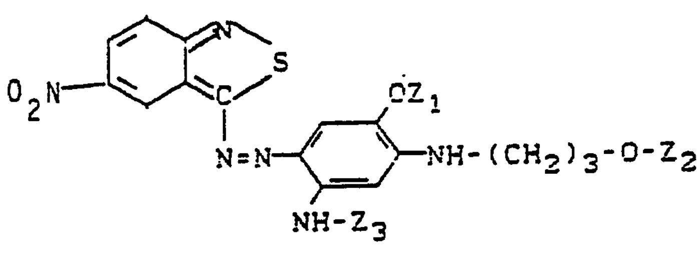

(IV)

wherein
$Z_1 = C_1–C_4$-alkyl,
$Z_2 = C_1–C_4$-alkyl,

$Z_3 = H, Z_4 -\underset{\underset{O}{\|}}{C}-Z_4, -SO_2-Z_4$ or $-\underset{\underset{O}{\|}}{C}-OZ_4$ and

$Z_4 = C_1–C_4$-alkyl.

6. Dyestuff according to claim 5, characterized in that
$Z_1$ = $C_1$–$C_2$-alkyl,
$Z_2$ = $CH_3$, $C_2H_5$ or n-$C_4H_9$ and
$Z_3$ = $COCH_3$.

## Revendications

1. Procédé pour préparer des colorants non ionogènes de formule:

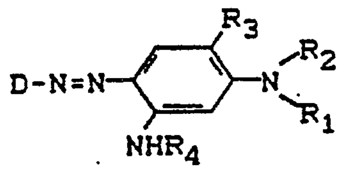

(I)

dans laquelle
D représente le reste d'un composant diazotable, qui présente au moins un substituant non ionogène capteur d'électrons,
$R_1$ et $R_2$ représentent chacun, indépendamment l'un de l'autre, un atome d'hydrogène ou un reste alkyle ou aralkyle, éventuellement substitué, ou bien ils forment ensemble un groupe alkylène,
$R_3$ représente un atome d'hydrogène, un reste $OR_1$ ou $R_1$, et
$R_4$ représente un atome d'hydrogène, un reste alkyle, aralkyle, aryle, hétéro-aryle ou acyle,
procédé caractérisé en ce qu'on fait réagir des composés azoïques de formule:

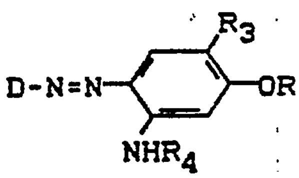

(II)

dans laquelle
D, $R_3$ et $R_4$ ont le sens précité et R représente $R_1$, avec l'ammoniac ou des amines de formule:

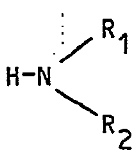

(III)

2. Procédé selon la revendication 1, caractérisé en ce qu'on fait réagir des composés de formule:

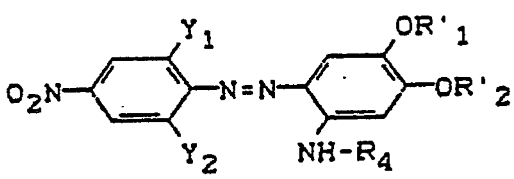

(IV)

dans laquelle
$R_4$ représente un atome d'hydrogène, un reste alkyle, aralkyle, aryle, hétéro-aryle ou acyle,
$R'_1$ représente un reste alkyle en $C_1$ à $C_4$,
$R'_2$ représente un reste alkyle en $C_1$ à $C_4$
$Y_1$ représente F, Cl, Br, J, CN, $NO_2$ ou $OR'_1$, et
$Y_2$ représente $Y_1$ ou $CF_3$, $SO_2R'_1$, $CO_2R_1$ ou $COR'_1$.

3. Procédé selon la revendication 1, caractérisé en ce qu'on fait réagir des composés de formule:

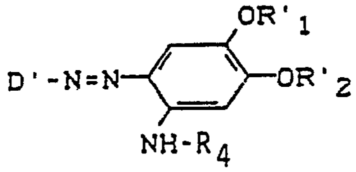

(V)

dans laquelle
D′ représente le reste d'un composant diazotable hétérocyclique de la nature indiquée ci-dessus, en particulier ceux répondant aux formules:

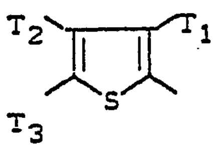
,
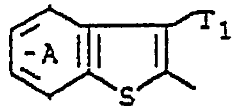
,
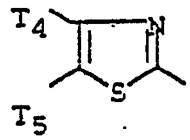
,
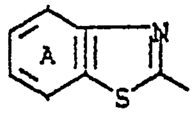
,
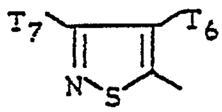
,
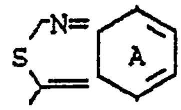

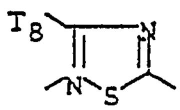
,
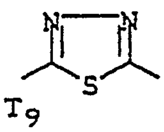
,
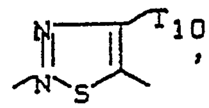

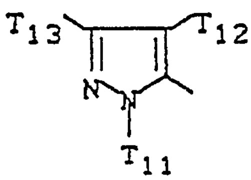
,
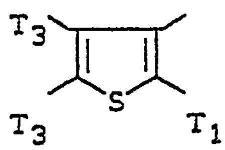
,

dans lesquelles
$T_1$ représente $NO_2$, CN ou $COOR_1$,
$T_2$ représente H ou $CH_3$,
$T_3$ représente $NO_2$, CN, $COOR_1$, $COR_1$, $COR_3$, $SO_2R_1$, $SO_2R_3$ ou un reste phénylazo,
$T_2$ + $T_3$ forment ensemble $-CH_2CH_2CH_2CH_2-$ ou $-CH_2CH_2CH_2-$,
$T_4$ représente H, $CH_3$ ou un reste phényle,
$T_5$ représente $NO_2$, $COOR_1$, CN ou un reste phénylazo,
$T_6$ représente Br, $NO_2$ ou CN,
$T_7$ représente H, $R_1$, $R_3$ ou $SO_2R_1/R_3$,
$T_8$ représente Cl, Br, CN, un reste phényle ou $SR_1$,
$T_9$ représente Cl, Br, $CF_3$, $SO_2R_1/R_3$ ou $SR_1$,
$T_{10}$ représente $R_1$, $R_3$, Cl, Br ou $COOR_1$,
$T_{11}$ représente H ou $R_1$,
$T_{12}$ représente $NO_2$, CN, Cl, Br, $COOR_1$,
$T_{13}$ représente H, CN ou $R_1$,
et $R_1/R_3/R_4$ ont les sens précités et les noyaux caractérisés par A ainsi que le reste phénylazo peuvent être substitués par $R_1$, Cl, Br, $NO_2$, CN, $COOR_1$, SCN ou $SO_2R_1$.

4. Procédé selon la revendication 1, caractérisé en ce qu'on conduit la réaction entre 50 et 150°C.

5. Colorants de formule:

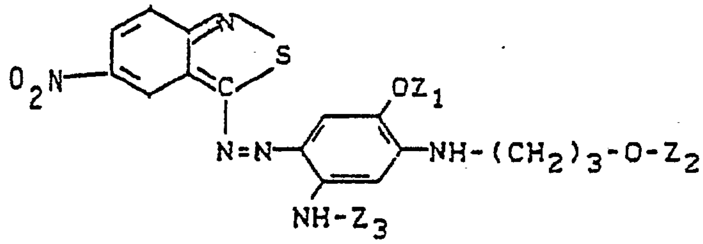

(VI)

dans laquelle
$Z_1$ représente un reste alkyle en $C_1$ à $C_4$,
$Z_2$ représente un reste alkyle en $C_1$ à $C_4$,
$Z_3$ représente H, $Z_4$, 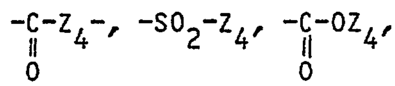 et
$Z_4$ représente un reste alkyle en $C_1$ à $C_4$.

6. Colorants selon la revendication 5, caractérisé en ce que:
$Z_1$ représente un reste alkyle en $C_1$ ou $C_2$,
$Z_2$ représente $CH_3$, $C_2H_5$ ou n-$C_4H_9$, et
$Z_3$ représente $COCH_3$.